# EUROPEAN PATENT SPECIFICATION

(11) **EP 2 473 448 B1**
(45) Date of publication and mention of the grant of the patent: **13.01.2016**
(21) Application number: 10757717.3
(22) Date of filing: 02.09.2010
(51) Int. Cl.: C02F 1/32

(54) **UV DISINFECTION SYSTEM WITH CONTACTLESS CLEANING**
UV-DESINFEKTIONSSYSEM MIT KONTAKTFREIER REINIGUNG
SYSTÈME DE DÉSINFECTION AUX ULTRAVIOLETS AVEC NETTOYAGE SANS CONTACT

(30) Priority: 02.09.2009 DE 102009039654
(43) Date of publication of application: 11.07.2012
(73) Proprietor: Xylem IP Holdings LLC, White Plains, NY 10604 (US)
(72) Inventor: KRÜGER, Friedhelm, 32657 Lemgo (DE); ANTON, Hans-Joachim, 33613 Bielefeld (DE); FIEKENS, Ralf, 33758 Schloss Holte-Stukenbrock (DE); BILLING, Ernst, Martin, 33649 Bielefeld (DE)
(74) Representative: Lenzing Gerber Stute
(86) International application number: PCT/EP2010/005385
(87) International publication number: WO 2011/026620

(56) References cited:
- EP-A2- 0 811 579
- GB-A- 2 360 035
- US-A- 5 874 740
- US-A1- 2005 061 998
- US-B1- 6 863 078

## Description

The present invention relates to a UV disinfecting system for waste water and drinking water having the features of the preamble of Claim 1.

It has been known for a long time that microbiologically loaded liquids such as waste water and drinking water may be treated by means of UV radiation. Here, even clarified waste water can be disinfected to such a degree that it may be introduced into rivers and bath waters. Drinking water can be disinfected by means of UV radiation, so that it is suitable for human consumption.

For disinfecting, low-pressure mercury radiators or medium-pressure mercury radiators are used, which are protected by cladding tubes and immersed into the water to be treated. The radiators and the cladding tubes are made from UV permeable material. In practice, quartz is used for this. The external surface of the cladding tubes is in direct contact with the surrounding liquid, and this is where any material depositing during operation over time separates from the surrounding liquid. This may be inorganic material such as, for example, lime. However, these may also be deposits of organic material.

As a result of the deposits on the external surfaces of the cladding tubes, the UV radiation emitted into the liquid will be reduced. In connection with the invention, reference will subsequently be made to an incrustation of the surface.

In order to remove such incrustations it was previously suggested to remove the radiators after an interruption of operation and then to clean the cladding tubes. It has also been suggested to clean radiators in closed channels in the case of an interruption of the liquid flow by flooding the channel with a liquid containing an acid. These solutions are not feasible for larger installations. Even an interruption of operation is disadvantageous.

Following that, various approaches for automatically cleaning the cladding tubes were developed. Each of these solutions is based on rings that are placed around the cylindrical cladding tubes and are then pushed along the cladding tubes by a drive. The mechanical contact between the ring and the cladding tube will then effect the cleaning. Depending on the application, various solutions have proven to be feasible. In detail, the following solutions are known from the prior art:
US 5,418,370 shows a cleaning device for a radiator cladding tube having a ring bearing against the cladding tube. The ring includes a chamber that is in communication with the cladding tube and into which a cleaning liquid is fed. Drive means are provided in order to move the ring along the cladding tube. In the course of this, the cleaning agent will gradually come into contact with the entire cladding tube surface and will effect there the removal of the incrustations. A similar solution is known from US 6,013,917. Here, the cleaning ring includes two seals spaced from one another in the axial direction of the cladding tube, which seals seal the chamber against the surrounding liquid. Here it is suggested to feed the cleaning liquid into the chamber via a refill system, so that during a movement of the cleaning ring in the axial direction, the cleaning liquid will also come into contact with the surface over the entire length of the cladding tube and can separate the incrustations. What is problematic with this type of cleaning rings is the behaviour in the case of calcareous incrustations on the cladding tube surface. The chambers inside the rings are reliant on a seal against the surrounding liquid which is as good as possible. This seal gets damaged by calciferous incrustations, so that the cleaning liquid cannot be retained in the chamber and gets lost or an increased consumption occurs. In the case of drinking water applications it is also undesirable if substantial amounts of the cleaning liquid flow over into the drinking water.

DE 10010127 A1 suggests a cleaning ring, wherein the surface of the cladding tube is surrounded by an open-pored foam material. Cleaning liquid is fed into this foam material. Here, the elasticity of the foam material ensures that the cleaning ring will rest well against the surface of the cladding tube at all times. By virtue of the open pores, the cleaning liquid cannot escape into the surrounding water to an undesirable degree. This technical solution has proven to be useful for particularly calciferous liquids. However, in continuous operation there is a risk that the cladding tubes will get scratched. There are further cleaning rings that operate without the supply of cleaning liquid. These cleaning rings effect a purely mechanical cleaning of the cladding tube surface. Thus, a radiation system for the water of fish ponds is known from US 5,942,109. What is suggested is a cleaning ring for a cladding tube of a UV radiator, which has brushes on the inside thereof. The brushes rest against the surface of the cladding tube and clean the cladding tube surface by means of an axial movement. For an application in the area of drinking water or waste water, such a solution has so far not been suggested. However, in continuous operation here, too, wear of the brushes and damage to the cladding tube surface have to be expected.

In EP 0 811 579 A a radiation system is provided with a cleaning apparatus which is disposed on irradiation chambers. The apparatus is mounted rigidly on the chambers wherein a cleaning fluid is used for washing of the dirt which deposited on the chambers.

Finally, DE 10125507 A1 shows a purely mechanically acting cleaning ring comprising a guide chamber and blades orientated vertically relative to the cladding tube surface in the guide chamber. The blades are configured as a helical ring which extends elastically around the cladding tube surface and, due to its elasticity, rests against the surface. This cleaning device adjusts itself to compensate for any wear. A high surface pressure of the cleaning ring against the cladding tube surface is achieved. Therefore the cleaning effect is continuously good. However, here, too, there is a risk that the cladding tube surface will be damaged over time.

Therefore, no UV radiation system is known from the prior art, wherein the cladding tube surface can be cleaned during running operation in a contactless manner, so that any damages of the cladding tube surface are eliminated.

It is therefore the object of the present invention to provide a UV radiation system, the cladding tube surfaces of which may be cleaned during running operation in a contactless manner.

This object is achieved by means of a system having features of Claim 1.

Since the at least one cleaning ring is provided at a distance from the surface of the cladding tube in contactless manner, openings directed towards the cladding tube are provided in the cleaning ring and supply means for supplying pressurised liquid into the openings are provided, so that the pressurised liquid is directed onto the surface of the cladding tube as a cleaning jet, any scratching of the cladding tube surface will be reliably prevented due to the absence of any mechanical contact between the cleaning ring and the cladding tube, whilst the supply of liquid under high pressure in the space between the cleaning ring and the cladding tube surface will loosen any incrustations building up there.

If a plurality of cleaning rings is provided with a common holder and a common supply for the pressurised liquid, a common drive and a common pressure supply may be provided for a plurality of radiators of a radiation device. If further the drive of the cleaning rings in the axial direction of the cladding tubes is carried out hydraulically, the pressure of the cleaning liquid may be used for the drive. In this case, only one external pressure source is required in order to provide the supply for both the cleaning and the drive thereof. The drive may advantageously be effected here by means of a double acting hydraulic cylinder. However, it may also be contemplated to provide a spindle drive via a turbine driven by the pressurised liquid.

Exemplary embodiments of the present invention will be described below by means of the drawings, wherein:
Figure 1 shows a longitudinal section of a cleaning ring having a number of nozzles;
Figure 2 shows a perspective view of the cleaning ring from Fig. 1;
Figure 3 shows a perspective view of a carrier having a total of twelve cleaning rings;
Figure 4 shows a holder for a plurality of cleaning rings with a hydraulic drive; and
Figure 5 shows a group of a total of six UV radiators with a cleaning assembly according to Fig. 3.

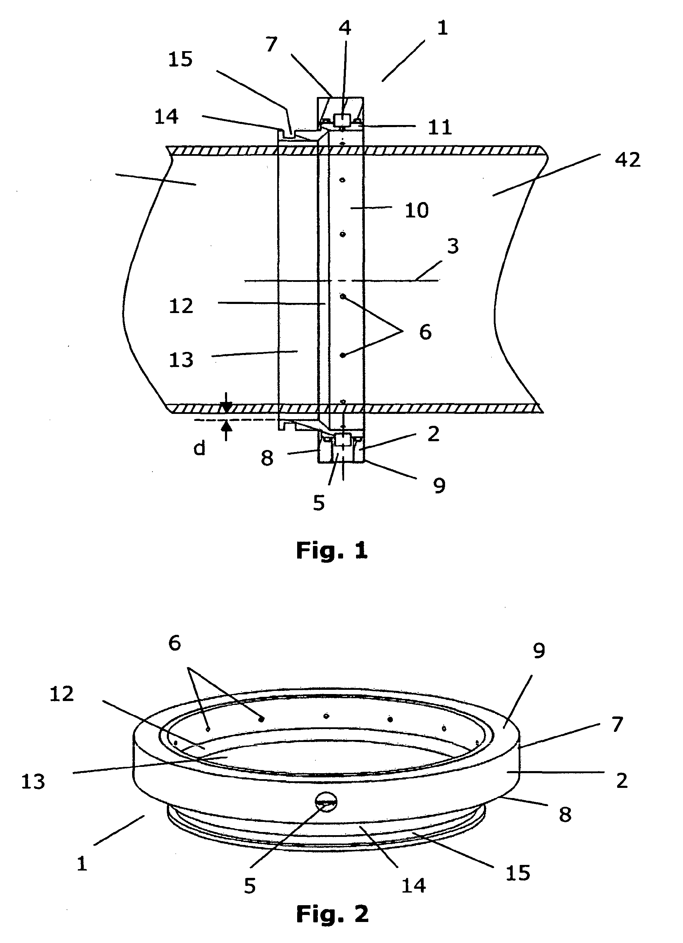

Figure 1 shows a longitudinal section of a cleaning ring 1 having a base body 2. The cleaning ring is essentially rotationally symmetrical to a longitudinal axis 3, which in operation also constitutes the axial direction of the UV disinfection system.

The cleaning ring 1 has a continuous channel 4 on the inside facing the axis 3, which channel is on the one hand fed via a connection bore 5 and on the other hand is in communication with nozzles 6 which extend from channel 4 to the inner circumferential surface of the cleaning ring 1. The base body 2 is delimited by an annular external circumferential surface 7 and two face sides 8 and 9 facing in the direction of the axis 3. The nozzles 6 are distributed over an inner circumferential surface 10 of the cleaning ring 1. The inner circumferential surface 10 is inserted in the base body 2 as part of a separate annular component 11. Next to the annular inner circumferential surface 10, the component 11 has a slope 2 extending towards the axis 3 and a ring area 13 having a narrower cross section. The ring area 13 in turn has an annularly circulating groove 15 on its external circumferential surface 14, which groove is open towards the outside.

The groove 14 is used for retaining the cleaning ring 1 in a drive and guide device.

A tubular cladding tube 42 having a circular cylindrical cross section is indicated in Figure 1. It is arranged coaxially to the axis 3 and has a diameter that is smaller than the clear width of the cleaning ring 1, so that an annular gap d is created between the ring area 13 and the cladding tube 42. The distance between the cladding tube surface and the circumferential surface 10 which carries the nozzles 6 is larger than the annular gap d.

Figure 2 shows a perspective view of the cleaning ring 1. Identical components are identified with the same reference numerals.

For producing the two-piece construction of the cleaning ring 1, the base body 2 is initially made, which has part of the annular channel 4 as an internally circulating groove which is open towards the axis 3. The inner ring 11 is made with the slope, the inner circumferential surface 13, the outer circumferential surface 14 and the groove 15 as well as with a large number of nozzles 6 and is then inserted into the base body 2, so that the nozzles 6 are in communication with the channel 4 which is otherwise closed towards the outside.

During operation, the channel 4 is fed with a liquid under high pressure via the connection 5, which liquid then exits through the nozzles 6 into the internal space of the cleaning ring. The pressure here is 5 bar to 200 bar, preferably 20 bar to 100 bar and in particular approximately 50 bar. As a source for the pressurised liquid, a reciprocating pump, as it is known for example from high-pressure cleaning devices, is preferably provided. As the pressurised fluid, water is preferably used which may also be taken from the stream of water to be treated or of water that has already been treated. It is possible, but not necessary, to add chemical cleaning agents or solvents or acids.

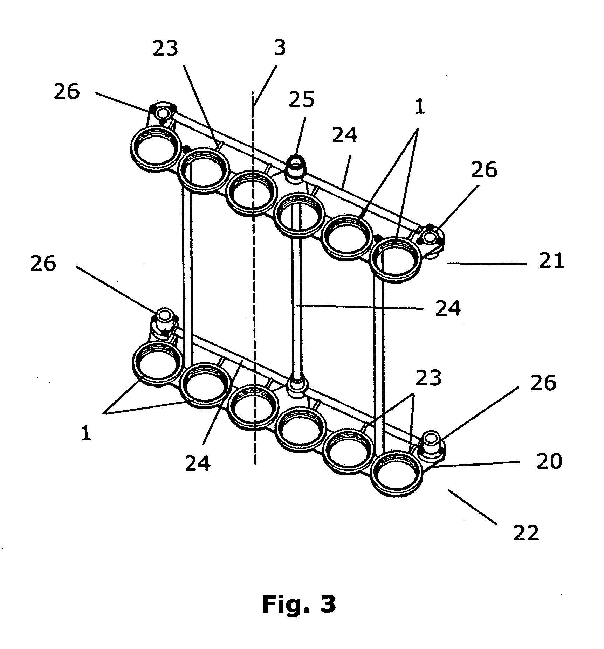

Figure 3 shows an arrangement of a total of 12 cleaning rings 1 in a holder 20. The holder 20 carries a top row 21 and a bottom row 22 of six cleaning rings 1 each. The cleaning rings 1 are orientated in such a way that one cleaning ring of the top row 21 is respectively in alignment with another cleaning ring of row 22 coaxially to the axis 3.

The holder 20 is provided with supply lines 23. One supply line 23 is respectively provided for each cleaning ring 1. This supply line is connected to a connection bore 5 of the respective cleaning ring 1. A common manifold line 24 leads from a pressure connection 25 to the supply lines 23 approximately in an H-shaped configuration. Guides 26 are provided in relation to the axial direction 3 laterally adjacent to rows 21 and 22 of cleaning rings 1, which guides allow the holder 21 to be guided on guiding rods orientated parallel to the axis 3.

Moreover, the cleaning rings 1 are retained in the grooves 15 (not shown here), so that they are firmly seated in the holder 20 in the direction of the axis 3.

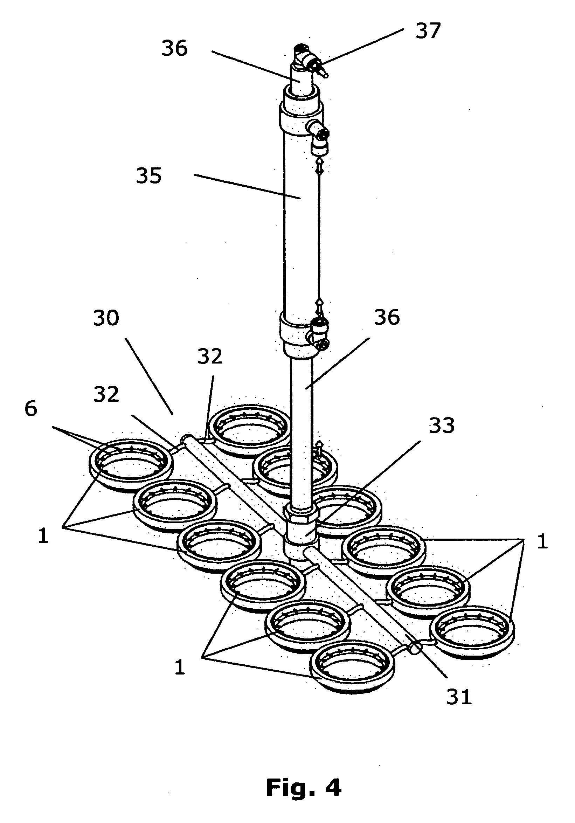

Figure 4 shows another arrangement of cleaning rings 1 in a holder 30. The holder 30 is implemented here as a manifold pipe 31 with connected supply lines 32. Each supply line 32 respectively leads to a connection bore 5 (not shown) of a cleaning ring 1. Pressurised liquid may be fed via a central connection 33 into the manifold pipe 31 and then exits via the supply lines 32, the ring channels (not shown) within the cleaning rings 1 and the nozzles 6 of the cleaning rings 1 towards the inside. The central connection 33 is at the same time the contact point for a double acting piston cylinder assembly 35, which can drivingly move the holder 30 with the cleaning rings 1 in the direction of the axis 3. A piston rod 36 is provided for transmitting force onto the holding device 30. The piston rod 36 reaches up to the central connection 33 and is designed to be hollow on the inside. On that end thereof which faces away from the holder 30, the piston rod 36 is provided with a connection 37 for the pressurised liquid which is passed to the nozzles 6 in the manner described.

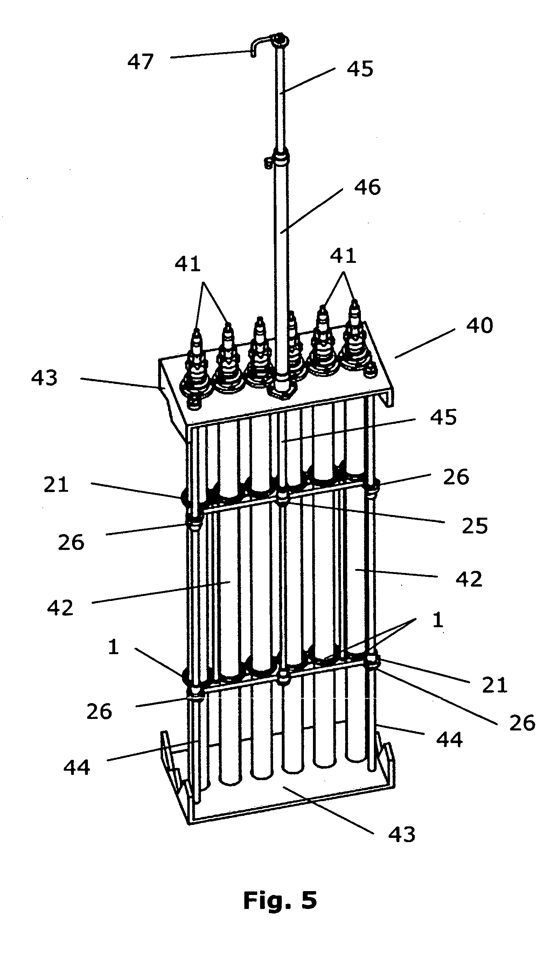

Finally, Figure 5 shows a UV disinfection system 40 as is known per se for waste water or drinking water applications. The disinfection system 40 comprises a total of six radiators 41 of the design type of a mercury low-pressure radiator. These radiators have an axial length of approximately 1.5 metres. They are arranged in cladding tubes 42 so as to be protected from low temperatures and mechanical damage, which would adversely affect the operation of the radiators 41. A common holder 43 fixes these tubes and the radiators relative to one another.

The holder 21 from Figure 3 is placed here onto the filling pipe 42 in such a way that two cleaning rings 1 located coaxially to the axis 3 are respectively placed on a cladding tube. Two guide rods 44 extending parallel to the cladding tubes 42 guide the holder 21 in the area of the guides 26 parallel to the cladding tubes. The central connection 25 is connected to a piston rod 45 of a double acting piston-cylinder assembly 46. The piston rod 45 is hollow on the inside as described in Figure 4 and is equipped with an end-side connection 47 for the supply of pressurised liquid. In operation, the piston-cylinder assembly 46 is designed to displace the holder 41 by means of the piston rod 45 in the longitudinal direction of the cladding tubes 42 and thus to move the cleaning rings 1 essentially completely over the entire extension of the outer cylindrical surface in the cladding tube 42.

In the course of this, the cleaning rings 1 will not come into contact with the surfaces of the cladding tubes 42 by virtue of the distance d.

The pressurised liquid itself may also be used as a drive, if the nozzles 6 are orientated at an angle towards the cladding tubes 6. In this case, a recoil component will be created in the direction of the axis 3, which recoil component effects a driving force in one direction. The return movement may then be carried out by means of a simpler drive, for example by means of a single acting hydraulic cylinder.

During operation, the assembly according to Figure 5 will be installed in a channel having flowing, pre-clarified waste water or drinking water. Organic and inorganic incrustations will inevitably occur during operation over time. In order to remove these incrustations, pressure is applied onto the piston-cylinder assembly 35, 46, so that the assembly of cleaning rings is moved by the piston rod 36, 45 in the longitudinal direction of the cladding tube 42. At the same time, a liquid such as, for example, water is fed into the connections 37, 47 under high pressure. Via the hollow piston rods 36, 45 and the holders, in particular the connection lines 23, 32 and the connection bores 5, this liquid is then fed under high pressure into the annular channel 4 of each cleaning ring 1. Due to the high pressure and the small diameter of the nozzles 6, the liquid will then exit from the nozzles 6 at high speed essentially radially towards the inside from the annular inner surface 10 of the cleaning ring, where it will impinge, in an otherwise contactless manner, onto the outer surface of the cladding tube 42, and will mechanically remove any incrustations there. The distance between the cleaning ring 1 and the cladding tube 42 tapers in the area of the slope 12 down to a minimum distance d. By virtue of this taper, the cleaning liquid exits from the gap between the cleaning ring and the cladding tube 42 on the side opposite the taper.

As a result, any incrustations will not get into the area of the minimum distance between the inner ring surface 13 and the cladding tube 42, but will be flushed in the opposite direction. Therefore, such incrustations cannot penetrate into this annular gap. In this way it is ensured that the ring 1 does not come into mechanical contact with the cladding tube surface 32. Any scraping contact with the surface of the cladding tubes 42 due to the axial movement of the cleaning rings 1 will therefore be carefully avoided. The cladding tube surface will therefore not be damaged during the cleaning operation.

## Claims

1. UV disinfection system for waste water and drinking water, comprising a number of UV radiators arranged in cladding tubes (42), said cladding tubes being configured essentially symmetrically to a longitudinal axis (3), as well as a cleaning device for the cladding tubes (42), which comprises the following:
- at least one cleaning ring (1) for each cladding tube, which surrounds the cladding tube (42),
- at least one drive means (35, 46) for driving the cleaning ring (1) in the direction of the axis (3),
- openings (6) directed towards the cladding tube (42) are provided in the cleaning ring (1), and
- supply means for the supply of pressurised liquid under high pressure into the openings (6) are provided, **characterised in that**
- the at least one cleaning ring (1) is disposed at a distance (d) from the surface of the cladding tube (42) in contactless manner, adapted to direct the pressurised liquid as a cleaning jet onto the surface of the cladding tube.

2. UV disinfection system according to Claim 1, **characterised in that** a plurality of cleaning rings (1) are provided with a common holder (25, 27) and a common supply for the pressurised liquid.

3. UV disinfection system according to any one of the preceding claims, **characterised in that** the drive of the cleaning rings (1) in the axial direction of the cladding tubes (42) is hydraulic.

4. UV disinfection system according to any one of the preceding claims, **characterised in that** the drive is carried out by means of a hydraulic cylinder.

5. UV disinfection system according to any one of the preceding claims 1 - 3, **characterised in that** a spindle drive is provided as the drive.

6. UV disinfection system according to any one of the preceding claims 4 to 5, **characterised in that** the drive is adapted to be fed with the pressurised liquid.

7. UV disinfection system according to any one of the preceding claims, **characterised in that** the pressurised liquid is water.

## Patentansprüche

1. UV-Desinfektionssystem für Abwasser und Trinkwasser, das eine Anzahl von UV-Strahlern, die in Mantelrohren (42) angeordnet sind, wobei die genannten Mantelrohre im Wesentlichen symmetrisch zu einer Längsachse (3) gestaltet sind, sowie eine Reinigungsvorrichtung für die Mantelrohre (42) aufweist, die Folgendes aufweist:
- wenigstens einen Reinigungsring (1) für jedes Mantelrohr, der das Mantelrohr (42) umgibt,
- wenigstens eine Antriebseinrichtung (35, 46) zum Antreiben des Reinigungsrings (1) in Richtung der Achse (3),
- Öffnungen (6), die zu dem Mantelrohr (42) hingerichtet sind, sind in dem Reinigungsring (1) bereitgestellt und
- Zufuhreinrichtungen für die Zufuhr von druckbeaufschlagter Flüssigkeit unter hohem Druck in die Öffnungen (6) sind bereitgestellt,
**dadurch gekennzeichnet, dass**
- der wenigstens eine Reinigungsring (1) in einer Entfernung (d) von der Oberfläche des Mantelrohrs (42) auf kontaktlose Weise angeordnet ist, wobei er ausgeführt ist, um die druckbeaufschlagte Flüssigkeit als einen Reinigungsstrahl auf die Oberfläche des Mantelrohrs zu richten.

2. UV-Desinfektionssystem nach Anspruch 1, **dadurch gekennzeichnet, dass** mehrere Reinigungsringe (1) mit einem gemeinsamen Halter (25, 27) und einer gemeinsamen Zufuhr für die druckbeaufschlagte Flüssigkeit versehen sind.

3. UV-Desinfektionssystem nach einem der vorhergehenden Ansprüche, **dadurch gekennzeichnet, dass** der Antrieb der Reinigungsringe (1) in der axialen Richtung der Mantelrohre (42) hydraulisch ist.

4. UV-Desinfektionssystem nach einem der vorhergehenden Ansprüche, **dadurch gekennzeichnet, dass** der Antrieb mithilfe eines Hydraulikzylinders durchgeführt wird.

5. UV-Desinfektionssystem nach einem der vorhergehenden Ansprüche 1 bis 3, **dadurch gekennzeichnet, dass** als Antrieb ein Spindelantrieb bereitgestellt ist.

6. UV-Desinfektionssystem nach einem der vorhergehenden Ansprüche 4 bis 5, **dadurch gekennzeichnet, dass** der Antrieb ausgeführt ist, um mit der druckbeaufschlagten Flüssigkeit gespeist zu werden.

7. UV-Desinfektionssystem nach einem der vorhergehenden Ansprüche, **dadurch gekennzeichnet, dass** die druckbeaufschlagte Flüssigkeit Wasser ist.

## Revendications

1. Système de désinfection aux UV pour les eaux usées et l'eau potable, comprenant un certain nombre de radiateurs UV disposés dans des tubes de gainage (42), lesdits tubes de gainage étant configurés essentiellement symétriquement à un axe longitudinal (3), ainsi qu'un dispositif de nettoyage pour les tubes de gainage (42), qui comprend ce qui suit :
- au moins un anneau de nettoyage (1) pour chaque tube de gainage, qui entoure le tube de gainage (42),
- au moins un moyen de commande (35, 46) pour entraîner l'anneau de nettoyage (1) dans la direction de l'axe (3),
- des ouvertures (6) dirigées vers le tube de gainage (42) sont fournies dans l'anneau de nettoyage (1), et
- des moyens d'approvisionnement pour l'approvisionnement de liquide pressurisé sous haute pression dans les ouvertures (6) sont fournis,
**caractérisé en ce que**
- le au moins un anneau de nettoyage (1) est disposé à une distance (d) de la surface du tube de gainage (42) de manière sans contact, adapté pour diriger le liquide pressurisé sous forme de jet de nettoyage sur la surface du tube de gainage.

2. Système de désinfection aux UV selon la revendication 1, **caractérisé en ce qu'**une pluralité d'anneaux de nettoyage (1) sont fournis avec un support commun (25, 27) et un approvisionnement commun pour le liquide pressurisé.

3. Système de désinfection aux UV selon l'une quelconque des revendications précédentes, **caractérisé en ce que** la commande des anneaux de nettoyage (1) dans la direction axiale des tubes de gainage (42) est hydraulique.

4. Système de désinfection aux UV selon l'une quelconque des revendications précédentes, **caractérisé en ce que** la commande est mise en oeuvre au moyen d'un cylindre hydraulique.

5. Système de désinfection aux UV selon l'une quelconque des revendications précédentes 1 à 3, **caractérisé en ce qu'**une commande par broche est fournie comme la commande.

6. Système de désinfection aux UV selon l'une quelconque des revendications précédentes 4 à 5, **caractérisé en ce que** la commande est adaptée pour être alimentée avec le liquide pressurisé.

7. Système de désinfection aux UV selon l'une quelconque des revendications précédentes, **caractérisé en ce que** le liquide pressurisé est l'eau.
